(19) Europäisches Patentamt
European Patent Office
Office européen des brevets

(11) **EP 3 838 945 A1**

(12) **EUROPÄISCHE PATENTANMELDUNG**

(43) Veröffentlichungstag:
**23.06.2021 Patentblatt 2021/25**

(21) Anmeldenummer: **19216787.2**

(22) Anmeldetag: **17.12.2019**

(51) Int Cl.:
*C08G 18/10* (2006.01)          *C08G 18/32* (2006.01)
*C08G 18/73* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **THERMOPLASTISCHES ALIPHATISCHES POLYURETHANPOLYMER MIT VERBESSERTEM SCHMELZVERHALTEN**

(57) Die vorliegende Erfindung betrifft thermoplastische aliphatische Polyurethanpolymere mit einem $\overline{M}_w$ von $\geq$ 170000 g/mol, wobei die Schmelzenthalpie $\Delta H_{Polymer}$ unabhängig von dem $\overline{M}_w$ des thermoplastischen aliphatischen Polyurethanpolymers ist, Zusammensetzungen enthaltend solche Polyurethanpolymere, ein Verfahren zu dessen Herstellung und die Verwendung dieser Polyurethanpolymere.

EP 3 838 945 A1

**Beschreibung**

Die vorliegende Erfindung betrifft thermoplastische aliphatische Polyurethanpolymere mit einem $\overline{M}_w$ von $\geq$ 170000 g/mol, wobei die Schmelzenthalpie $\Delta H_{Polymer}$ unabhängig von dem $\overline{M}_w$ des thermoplastischen aliphatischen Polyurethanpolymers ist, Zusammensetzungen enthaltend solche Polyurethanpolymere, ein Verfahren zu dessen Herstellung und die Verwendung dieser Polyurethanpolymere.

Polyurethane und insbesondere thermoplastische Polyurethane werden aufgrund ihrer hervorragenden physikalischen Eigenschaften seit Jahren für die unterschiedlichsten Einsatzzwecke verwendet. Trotz der breiten Verwendbarkeit von Polyurethanen gibt es Anwendungsbereiche, in denen andere Kunststoffe, wie beispielsweise Polyamid-Kunststoffe, verwendet werden, weil keine Polyurethane mit geeigneten physikalischen Eigenschaften verfügbar sind oder diese nur schwer bereitgestellt werden können.

Das Schmelzverhalten von TPU wird durch das Verhältnis von Weich- und Hartsegmenten im Polymer beeinflusst. Dabei werden unter Hartsegmenten die Urethan-Einheiten des Polyurethans verstanden und unter Weichsegmenten die Polyol-Ketten. In einem ausgehärteten, abgekühlten TPU sind Weich- und Hartsegmente in einem polymeren Zweiphasensystem angeordnet. Darin sind die in den Hartsegmenten nebeneinander liegenden Domänen über Wasserstoffbrücken assoziiert und bilden kristalline Strukturen. Die Enden der Polymerketten stellen Defekte dar, die nicht in die kristallinen Strukturen eingebaut werden können. Um TPU mit einem geringeren Kristallisationsgrad aufzuschmelzen, muss weniger Energie aufgebracht werden als für das Aufschmelzen von TPU mit einem hohen Kristallisationsgrad, d.h. die Schmelzenthalpie ist bei einem TPU mit einem vergleichsweise hohen Molekulargewicht niedriger als bei einem TPU mit einem vergleichsweise niedrigen Molekulargewicht.

Die CN 10 714 1437 bezieht sich auf TPU, das in 3D-Druckverfahren verwendet werden soll. Die Druckschrift offenbart eine Synthese durch Reaktivextrusion und lehrt, dass die Schmelzenthalpie eines TPU durch die Zugabe eines Kettenverlängerers beeinflusst werden kann, wobei der Kettenverlängerer ein Cyclodextrin-Derivat ist.

Die CN 10 500 1626 offenbart ebenfalls ein Verfahren für die Reaktiv-Extrusion von Polyurethan. Die Druckschrift offenbart, dass die Fließeigenschaften des TPU durch Zugabe einer Mischung aus Diphenylsilylglykol und Ethylenglykol beeinflusst werden können.

Die US 2017/145146 bezieht sich auf TPU aus Komponenten, die aus nachwachsenden, pflanzlichen Ressourcen stammen. Die Druckschrift offenbart die Synthese in einem Batch-Verfahren und lehrt, dass die Schmelztemperatur eines TPU unter anderem vom Isocyanat-Index und der Polymerisationszeit abhängt.

Es ist Aufgabe der vorliegenden Erfindung ein thermoplastisches aliphatisches Polyurethanpolymer mit guten verarbeitungstechnischen Eigenschaften wie zum Beispiel gutem Schmelzverhalten bereitzustellen sowie ein Verfahren zu dessen Herstellung.

Diese Aufgabe wurde gelöst durch ein thermoplastisches aliphatisches Polyurethanpolymer mit einem $\overline{M}_w$ von $\geq$ 170000 g/mol, dadurch gekennzeichnet, dass die Schmelzenthalpie $\Delta H_{Polymer}$ unabhängig von dem $\overline{M}_w$ des thermoplastischen aliphatischen Polyurethanpolymers ist, $\Delta H_{Polymer}$ die gemessene Schmelzenthalpie in [J/g] des thermoplastischen aliphatischen Polyurethanpolymers ist, ermittelt mit Dynamischer Differenzkalorimetrie (DSC) gemäß DIN EN ISO 11357-1:2017-02 mit einer Heizrate von 20 K/min im Bereich von -40 °C bis 220 °C, und $\overline{M}_w$ das Massenmittel der Molmasse ist, ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

Es wurde überraschend gefunden, dass die erfindungsgemäßen thermoplastischen aliphatischen Polyurethanpolymere ab einem $\overline{M}_w$ von $\geq$ 170000 g/mol eine nahezu konstante Schmelzenthalpie aufweisen, d.h. das die Schmelzenthalpie unabhängig vom massengemittelten Molekulargewicht $\overline{M}_w$ ist. Dies hat den Vorteil, dass für erfindungsgemäße Polyurethanpolymere mit unterschiedlichen Molekulargewichten weniger Energie zum Verflüssigen aufgewandt werden muss. Bei schmelzeformenden Verfahren führt dies zu einem breiteren Temperaturverarbeitungsfenster, geringeren Qualitätsschwankungen und einem geringeren Aufwand bzgl. der Einstellungen an Maschinen zum thermoplastischen Verarbeiten z.B. Extruder. Ein weiterer Vorteil ist, dass erfindungsgemäße Polyurethane mit einem sehr hohen Molekulargewicht die nahezu gleiche thermische Stabilität aufweisen, wie erfindungsgemäße Polyurethanpolymere mit einem deutlich geringeren Molekulargewicht. Es eröffnet sich also die Möglichkeit ein in Bezug auf die Verarbeitung und die Anwendung anforderungsgerechtes Material maßzuschneidern.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Unter "aliphatisch" oder "aliphatischer Rest" werden im Sinne der Erfindung azyklische gesättigte Kohlenwasserstoffreste verstanden, die verzweigt oder linear sowie vorzugsweise unsubstituiert sind. Diese aliphatischen Kohlenwasserstoffreste enthalten vorzugsweise 2, 3, 4, 5 oder 6 Kohlenstoffatome.

Bevorzugt bedeuten erfindungsgemäß die Ausdrücke "umfassend" oder "enthaltend", "im Wesentlichen bestehend aus" und besonders bevorzugt "bestehend aus".

Falls nicht explizit anders angegeben, werden in der vorliegende Erfindung das Zentrifugenmittel der Molmasse $\overline{M}_z$, das Massenmittel der Molmasse $\overline{M}_w$ und das Zahlenmittel der Molmasse $\overline{M}_n$ mittels Gelpermeationschromatographie (GPC) unter Verwendung von Polymethylmethacrylat als Standard bestimmt. Die zu vermessende Probe wird in einer Lösung von 3 g Kaliumtrifluoracetat in 400 Kubikzentimeter Hexafluorisopropanol aufgelöst (Probenkonzentration ca. 2 mg/Kubikzentimeter), dann mit einer Flussrate von 1 Kubikzentimeter/Minute über eine Vorsäule gegeben und anschließend über drei in Reihe geschaltete Chromatographiesäulen getrennt, zuerst über eine 1000 Å PSS PFG 7 μm Chromatographiesäule, dann über eine 300 Å PSS PFG 7 μm Chromatographiesäule und zuletzt über eine 100 Å PSS PFG 7 μm Chromatographiesäule. Als Detektor wurde ein Brechungsindex-Detektor (RI-Detektor) verwendet.

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^{\,3}}{\sum_i n_i M_i^{\,2}} \ \text{ in g/mol}$$

wobei:

$M_i$ die molare Masse der Polymere der Fraktion i ist, so dass $M_i < M_{i+1}$ für alle i, in g/mol ist,
$n_i$ die Stoffmenge des Polymers der Fraktion i, in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^{\,2}}{\sum_i n_i M_i} \ \text{ in g/mol}$$

wobei:

$M_i$ die molare Masse der Polymere der Fraktion i ist, so dass $M_i < M_{i+1}$ für alle i, in g/mol ist,
$n_i$ die Stoffmenge des Polymers der Fraktion i, in mol ist.

Das Zahlenmittel der Molmasse $\overline{M}_n$ wurde ebenfalls aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \ \text{ in g/mol}$$

wobei:

$M_i$ die molare Masse der Polymere der Fraktion i ist, so dass $M_i < M_{i+1}$ für alle i, in g/mol ist,
$n_i$ die Stoffmenge des Polymers der Fraktion i, in mol ist.

In einer bevorzugten Ausführungsform weist das erfindungsgemäße thermoplastische aliphatische Polyurethanpolymer ein $\overline{M}_w$ im Bereich von 170000 g/mol bis 350000 g/mol, vorzugsweise im Bereich von 175000 g/mol bis 300000 g/mol, besonders bevorzugt im Bereich von 200000 g/mol bis 300000 g/mol, noch bevorzugter im Bereich von 250000 g/mol bis 285000 g/mol auf.

In einer bevorzugten Ausführungsform ist die Schmelzenthalpie $\Delta H_{Polymer}$ unabhängig von dem $\overline{M}_w$ des erfindungsgemäßen thermoplastischen aliphatischen Polyurethanpolymers und die Schmelzenthalpiewerte entsprechender Polyurethanpolmere mit unterschiedlichem $\overline{M}_w$, welches jeweils ≥ 170000 g/mol ist, unterscheiden sich nicht mehr als 2%, vorzugsweise nicht mehr 1,5% und besonders bevorzugt nicht mehr 1% von arithmetischen Mittel der Schmelzenthalpien dieser Polyurethanpolymere.

Dies hat den Vorteil, dass es zu einem geringeren Schrumpf kommt und höhere Maßhaltigkeit bei der Weiterverarbeitung erzielt werden kann. Dieses ist insbesondere für Prozesse vorteilhaft in welchen die Schmelze möglichst lange flüssig bleiben soll und das Verarbeitungsfenster in der Schmelze der begrenzende Prozess für das Verarbeitungsfenster ist, z.B. beim Extrusionsschäumen oder dem Thermoformen. Für den Spritzguss lässt sich so die Anzahl an Einspritzpunkten reduzieren und es lassen sich größere Bauteile realisieren.

In einer weiteren bevorzugten Ausführungsform weist das erfindungsgemäße thermoplastische aliphatische Polyurethanpolymer einen Kristallinitätsgrad $\chi$ von $\geq$ 40 % auf, wobei der Kristallinitätsgrad $\chi$ gemäß der folgenden Gleichung bestimmt wird:

$$\chi = (\Delta H_{M,Polymer}/\Delta H_{Kristall,100\%}) \cdot 100\%,$$

wobei $\Delta H_{M,Polymer}$ die gemessene Schmelzenthalpie in [J/g] des thermoplastischen aliphatischen Polyurethanpolymers ist, ermittelt mit Dynamischer Differenzkalorimetrie (DSC) gemäß DIN EN ISO 11357-1:2017-02 mit einer Heizrate von 20 K/min im Bereich von -40 °C bis 220 °C, und $\Delta H_{Kristall,100\%}$ die Schmelzenthalpie des entsprechenden zu 100 % kristallinen thermoplastischen aliphatischen Polyurethanpolymers in [J/g] ist, ermittelt mit Dynamischer Differenzkalorimetrie und Röntgenstreuanalyse. Hierzu wird die Schmelzenthalpie der Probe durch Dynamische Differenzkalorimetrie (DSC) gemessen, vorzugsweise mit Dynamischer Differenzkalorimetrie und die Kristallinität der Probe mittels Röntgenstreuung ermittelt. Das Verhältnis der beiden Werte entspricht dann $\Delta H_{Kristall,100\%}$, gemäß der Literatur (Kajiyama, T.; MacKnight, W.J.; Polymer Journal, volume 1, 548-554 (1970)).

Für ein Polymer aufgebaut aus 1,6-Diisocyanatohexan (HDI) und 1,4-Butandiol ist in der Literatur (Kajiyama, T.; MacKnight, W.J.; Polymer Journal, volume 1, 548-554 (1970)) ein Wert für $\Delta H_{Kristall,100\%}$ von 188 J/g bestimmt worden ermittelt nach dem oben beschriebenen Verfahren.

In einer weiteren bevorzugten Ausführungsform weist das erfindungsgemäße thermoplastische aliphatische Polyurethanpolymer einen Kristallinitätsgrad $\chi$ im Bereich von 40 % bis 55 %, bevorzugt im Bereich von 45 % bis 54 %, noch bevorzugter im Bereich von 48 % bis 53 % und am bevorzugsten im Bereich von 50 % bis 53 % aufweist.

In einer weiteren bevorzugten Ausführungsform ist die Schmelzenthalpie $\Delta H_{M,Polymer}$ des erfindungsgemäßen thermoplastischen aliphatischen Polyurethanpolymers $\leq$ 100 J/g, ermittelt mit Dynamischer Differenzkalorimetrie (DSC) gemäß DIN EN ISO 11357-1:2017-02 mit einer Heizrate von 20 K/min im Bereich von -40 °C bis 220 °C. Vorzugsweise liegt die Schmelzenthalpie $\Delta H_{M,Polymer}$ des erfindungsgemäßen thermoplastischen aliphatischen Polyurethanpolymers in einem Bereich von 90 J/g bis 100 J/g, besonders bevorzugt in einem Bereich von 95 J/g bis 100 J/g, besonders bevorzugt in einem Bereich von 98 J/g bis 100 g/J, jeweils ermittelt mit Dynamischer Differenzkalorimetrie (DSC) gemäß DIN EN ISO 11357-1:2017-02 mit einer Heizrate von 20 K/min im Bereich von -40 °C bis 220 °C.

In einer weiteren bevorzugten Ausführungsform liegt das Verhältnis $\overline{M}_w / \overline{M}_n$ des erfindungsgemäßen thermoplastischen aliphatischen Polyurethanpolymers in einem Bereich von 8.5 bis 20, vorzugsweise in einem Bereich von 9 bis 18, besonders bevorzugt in einem Bereich von 10 bis 15, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer weiteren bevorzugten Ausführungsform liegt das Verhältnis $\overline{M}_z / \overline{M}_w$ des erfindungsgemäßen thermoplastischen aliphatischen Polyurethanpolymers in einem Bereich von 3 bis 8 vorzugsweise in einem Bereich von 4,5 bis 6,1, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

Zur Herstellung der erfindungsgemäßen thermoplastischen aliphatischen Polyurethanpolymere werden eine oder mehrere aliphatische Polyisocyanate mit einem oder mehreren aliphatischen Polyolen umgesetzt.

Als aliphatische Polyisocyanate eignen sich alle dem Fachmann bekannten aliphatischen Polyisocyanate, insbesondere monomere aliphatische Diisocyanate. Geeignete Verbindungen sind vorzugsweise solche des Molekulargewichtsbereiches von $\geq$ 140 g/mol bis $\leq$ 400 g/mol, wobei es unerheblich ist, ob diese mittels Phosgenierung oder nach phosgenfreien Verfahren erhalten wurden. Die Polyisocyanate und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

Im Rahmen der vorliegenden Erfindung wird unter dem Begriff "monomeres Diisocyanat" ein Diisocyanat verstanden, welches keine dimeren, trimeren etc. Strukturen aufweist, Teil von dimeren, trimeren etc. Strukturen ist und/oder ein Reaktionsprodukt von einer NCO-Gruppe mit einer NCO-reaktiven Gruppe, wie beispielsweise Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindi onstrukturen.

In einer bevorzugten Ausführungsform ist das eine oder sind die mehreren aliphatischen Polyisocyanate ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus. In einer anderen bevorzugten Aufführungsform werden 1,5-Diisocyanatopentan und / oder 1,6-Diisocyanatohexan als aliphatische Polyisocyanate eingesetzt. In einer weiteren bevorzugten Aufführungsform wird nur 1,6-Diisocyanatohexan als aliphatisches Polyisocyanate eingesetzt.

Als aliphatische Polyole eignen sich alle dem Fachmann bekannten organische Diole, die ein Molekulargewicht von 62 g/mol bis 210 g/mol, vorzugsweise Diole, die ein Molekulargewicht im Bereich von 62 g/mol bis 120 g/mol aufweisen. Die Diole und / oder deren Vorläuferverbindungen können aus fossilen oder biologischen Quellen gewonnen worden sein. Bevorzugt sind die aliphatischen Diole zum Aufbau des erfindungsgemäßen thermoplastischen Polyurethanpolymers ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol und 1,6-Hexandiol oder einer Mischung aus mindestens zwei hieraus. Vorzugsweise werden keinen verzweigten aliphatischen Diole eingesetzt

In einer bevorzugten Ausführungsform ist das eine oder sind die mehreren aliphatischen Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus. In einer weiteren bevorzugten Aufführungsform werden 1,3-Propandiol, 1,4-Butandiol, 1,6-Hexandiol und / oder Mischungen aus mindestens zwei hieraus als aliphatische Diole eingesetzt. In einer weiteren bevorzugten Aufführungsform werden 1,4-Butandiol und / oder 1,6-Hexandiol als aliphatische Diole eingesetzt. In einer anderen bevorzugten Aufführungsform wird nur 1,4-Butandiol als aliphatisches Diol eingesetzt.

In einer weiteren bevorzugten Ausführungsform ist das erfindungsgemäße thermoplastische aliphatische Polyurethanpolymer durch Umsetzung von einem oder mehreren aliphatischen Polyisocyanaten mit einem Molekulargewicht im Bereich von $\geq$ 140 g/mol bis $\leq$ 400 g/mol, vorzugsweise von einem oder mehreren aliphatischen Diisocyanaten mit einem Molekulargewicht im Bereich von 140 g/mol bis 170 g/mol, mit einem oder mehreren aliphatischen Polyolen mit einem Molekulargewicht im Bereich von 62 g/mol bis 210 g/mol, vorzugsweise einem oder mehreren aliphatischen Diolen mit einem Molekulargewicht im Bereich von 62 g/mol bis 210 g/mol, besonders bevorzugt einem oder mehreren unverzweigten aliphatischen Diolen mit einem Molekulargewicht im Bereich von 62 g/mol bis 120 g/mol erhältlich.

In einer weiteren bevorzugten Ausführungsform besteht das erfindungsgemäße thermoplastische aliphatische Polyurethanpolymer zu mindestens 80 Gew.-%, vorzugsweise zu mindestens 90 Gew.-%, besonders bevorzugt zu mindestens 95 Gew.-%, noch bevorzugter zu mindestens 98 Gew.-%, noch mehr bevorzugter zu mindestens 99 Gew.-%, und am bevorzugtesten zu mindestens 99,9 Gew.-% aus dem Reaktionsprodukt der Umsetzung von 1,6-Hexamethylendiisocyanat mit 1,4-Butandiol, bezogen auf die Gesamtmasse des thermoplastischen aliphatischen Polyurethanpolymers. Bei der Ermittlung des Anteils des Reaktionsprodukts der Umsetzung von 1,6-Hexamethylendiisocyanat mit 1,4-Butandiol werden nur die polymeren Bestandteile betrachtet, bezogen auf die Gesamtmasse des polymeren thermoplastischen aliphatischen Polyurethanpolymers.

Die Erfindung ebenfalls betrifft ein Verfahren zur Herstellung eines erfindungsgemäßen thermoplastischen aliphatischen Polyurethanpolymers, wobei in einem ersten Schritt zumindest ein oder mehrere aliphatische Polyisocyanate mit einem oder mehreren aliphatischen Polyolen, gegebenenfalls in Gegenwart eines Katalysators und/ oder Hilfs- und Zusatzstoffen, zu mindestens einem Prepolymer umgesetzt werden, vorzugsweise zu mindestens einem Hydroxyterminierten Prepolymer, und das im ersten Schritt erhaltende mindestens eine Prepolymer in einem zweiten Schritt mit mindestens einem Kettenverlängerer, vorzugsweise mindestens einem Polyisocyanat, besonders bevorzugt mindestens einem Diisocyanat, zum thermoplastischen Polyurethanpolymer umgesetzt wird, wobei insgesamt ein molares NCO/OH-Verhältnis aller im Verfahren eingesetzter Polyisocyanate und Polyole im Bereich von 1,0 : 0,95 bis 0,95 : 1,0 vorliegt. In einer bevorzugten Ausführungsform des erfindungsgemäßen Verfahrens werden unabhängig voneinander als aliphatische Polyisocyanate ein oder mehrere aliphatische Polyisocyanate mit einem Molekulargewicht im Bereich von $\geq$ 140 g/mol bis $\leq$ 400 g/mol, vorzugsweise von ein oder mehrere aliphatische Diisocyanate mit einem Molekulargewicht im Bereich von 140 g/mol bis 170 g/mol eingesetzt.

In einer bevorzugten Ausführungsform des erfindungsgemäßen Verfahrens werden unabhängig voneinander als aliphatische Polyole ein oder mehrere aliphatische Polyole mit einem Molekulargewicht im Bereich von 62 g/mol bis 210 g/mol, vorzugsweise ein oder mehrere aliphatische Diole mit einem Molekulargewicht im Bereich von 62 g/mol bis 210 g/mol, besonders bevorzugt ein oder mehrere unverzweigte aliphatische Diole mit einem Molekulargewicht im Bereich von 62 g/mol bis 120 g/mol.

In einer weiteren bevorzugten Ausführungsform des erfindungsgemäßen Verfahrens werden unabhängig voneinander als aliphatische Polyisocyanate ein aliphatische Diisocyanate eingesetzt, vorzugweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan und/oder Mischungen aus mindestens 2 hieraus, besonders bevorzugt ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und noch bevorzugter wobei als aliphatisches Polyisocyanat 1,6-Diisocyanatohexan (HDI) eingesetzt wird, und als aliphatische Polyole aliphatische Diole eingesetzt, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol und/oder Mischungen aus mindestens 2 hieraus, besonders bevorzugt ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, noch bevorzugter ausgewählt wobei als aliphatisches Polyol 1,4-Butandiol eingesetzt wird.

In einer weiteren bevorzugten Ausführungsform des erfindungsgemäßen Verfahrens wird als aliphatisches Polyisocyanat 1,6-Diisocyanatohexan (HDI) und als aliphatisches Polyol 1,4-Butandiol eingesetzt.

Die Umsetzung von ein oder mehreren aliphatischen Polyisocyanate mit einem oder mehreren aliphatischen Polyolen zur Erzeugung des erfindungsgemäßen thermoplastischen aliphatischen Polyurethanpolymers kann in Gegenwart von einem oder mehreren Katalysatoren stattfinden.

Geeignete erfindungsgemäße Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und / oder Zinnverbindungen.

Der Katalysator wird in Mengen von 0,001 Gew.-% bis 2,0 Gew.-%, bevorzugt von 0,005 Gew.-% bis 1,0 Gew.-% besonders bevorzugt von 0,01 Gew.-% bis 0,1 Gew.-% bezogen auf die Diisocyanatkomponente eingesetzt. Der Katalysator kann in Substanz eingesetzt werden oder gelöst in der Diol-Komponente. Ein Vorteil ist hierbei, dass die dann erhaltenen thermoplastischen Polyurethane keine Verunreinigungen durch gegebenenfalls mitverwendete Lösungsmittel für den Katalysator enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Lösungsmittel für den Katalysator sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch Lösungsmittel für den Katalysator zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

Bei Hilfs- und Zusatzstoffen kann es sich beispielsweise um im Bereich der Thermoplasttechnologie gängige Hilfs- und Zusatzstoffe wie Farbstoffe, Füllstoffe, Verarbeitungshilfsmittel, Weichmacher, Nucleierungsmittel, Stabilisatoren, Flammschutzmittel, Entformungsmittel oder verstärkende Hilfs- und Zusatzstoffe handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Hilfs- und Zusatzstoffe mehrerer Typen zu verwenden.

Im Rahmen der vorliegenden Erfindung wird unter einem "Hydroxy-terminierten Prepolymer" ein Prepolymergemisch verstanden, in dem mindestens 90 Anzahl-% der Molekülenden eine Hydroxygruppe aufweisen und die verbleibenden 10 Anzahl-% Molekülenden weitere HydroxyGruppen, NCO-Gruppen oder nicht-reaktive Gruppen aufweisen. Unter einer "nicht-reaktiven Gruppe" wird im Rahmen der vorliegenden Erfindung eine Gruppe verstanden, die unter den erfindungsgemäßen Reaktionsbedingungen weder mit NCO-Gruppen, noch mit OH-Gruppen in einer Zeiteinheit reagiert, die der erfindungsgemäßen Reaktionszeit entspricht. Eine nicht-reaktive Gruppe kann beispielsweise aus einer reaktiven NCO-Gruppe oder OH-Gruppe durch Reaktion mit geeigneten Reaktionspartnern (Kettenabbrecher) in eine nicht-reaktive Gruppe umgewandelt werden. Als Kettenabbrecher eignen sich alle monofunktionellen Verbindungen, die unter den erfindungsgemäßen Reaktionsbedingungen entweder mit einer Isocyanatgruppe oder mit einer Hydroxygruppe reagieren, beispielsweise Mono-Alkohole, wie Methanol, Mono-Amine, wie Diethylamin und Monoisocyanate, wie Butylisocyanat. Das Hydroxy-terminierte Prepolymer kann beispielsweise an einem Molekülende eine Hydroxygruppe aufweisen und an dem oder den anderen Molekülenden beispielsweise eine Alkylgruppe. Wenn im Rahmen der vorliegenden Erfindung von einem Hydroxy-terminierten Prepolymer gesprochen wird, ist hiermit auch immer ein Gemisch aus dem mindestens einen Hydroxy-terminierten Prepolymer und einem nicht-reaktiv terminierten Prepolymer umfasst. Ferner kann es sich aufgrund der Statistik der Reaktion abgesehen von Nebenreaktionen auch um ein Gemisch von nicht Hydroxy-terminierten bis zu zweifach Hydroxy-terminierten Prepolymeren handeln. Vorzugsweise handelt es sich überwiegend um ein Gemisch von zweifach Hydroxy-terminierten Prepolymeren. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

Im Rahmen der vorliegenden Erfindung wird unter einem "nicht-reaktiv terminierten Prepolymer" ein Prepolymer verstanden, bei dem die reaktiven Gruppen (NCO-Gruppen oder OH-Gruppen) durch Reaktion mit geeigneten Reaktionspartnern (Kettenabbrechern) in chemische Gruppen umgewandelt wurden, die unter den genannten Reaktionsbedingungen weder mit NCO-Gruppen, noch mit OH-Gruppen reagieren. Als Kettenabbrecher eignen sich beispielsweise Mono-Alkohole wie Methanol, Mono-Amine wie Diethylamin und Monoisocyanate wie Butylisocyanat. Der molare Anteil der Kettenabbrecher kann beispielsweise von 0,001 mol-% bis 2 mol-% und bevorzugt von 0,002 mol-% bis 1 mol-% betragen, jeweils bezogen auf die Gesamtstoffmenge der entsprechenden Monomerkomponente.

Das mindestens eine Hydroxy-terminierte Prepolymer kann beispielsweise aus der Gesamtmenge der aliphatischen Polyole und einer ersten Teilmenge der aliphatischen Polyisocyanate gebildet werden. In einem oder mehreren darauffolgenden Schritten können dann weitere Teilmengen der aliphatischen Polyisocyanate, d.h. eine zweite, dritte etc. Teilmenge hinzugefügt werden, um weitere erfindungsgemäße, im Mittel höher molekulare, Hydroxy-terminierte Prepolymere aufzubauen. Alternativ kann das mindestens eine Hydroxy-terminierte Prepolymer beispielsweise aus einer ersten Teilmenge der aliphatischen Polyole und einer ersten Teilmenge der aliphatischen Polyisocyanate gebildet werden. In einer oder mehreren darauffolgenden Verfahrensstufen können dann weitere Teilmengen der aliphatischen Polyole und der aliphatischen Polyisocyanate zugeführt werden, um weitere im Mittel höher molekulare Hydroxy-terminierte Prepolymere aufzubauen.

Die Umsetzung kann mit oder ohne Katalysator durchgeführt werden, allerdings ist eine katalysierte Umsetzung bevorzugt. Als Katalysatoren eigenen sich die oben aufgeführten Katalysatoren. Die Umsetzung kann Lösungsmittelfrei oder in Lösung erfolgen. In Lösung bedeutet, dass zumindest einer der Reaktionspartner in einem Lösungsmittel gelöst ist, bevor er zu dem anderen Reaktionspartner gegeben wird. Vorzugsweise wird die Umsetzung Lösungsmittelfrei durchgeführt. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt.

Die Temperaturen zur Bildung des mindestens einen Prepolymers, vorzugsweise Hydroxy-terminierten Prepolymers, durch das erfindungsgemäße Verfahren können in Abhängigkeit von den eingesetzten Verbindungen ausgewählt werden. Bevorzugt ist hierbei jedoch, wenn die Umsetzung bei Temperaturen von $\geq 40\ °C$ bis $\leq 260\ °C$, vorzugsweise von $\geq 60\ °C$ bis $\leq 250\ °C$, bevorzugter von $\geq 100\ °C$ bis $\leq 240\ °C$, besonders bevorzugt von $\geq 120\ °C$ bis $\leq 220\ °C$ durchgeführt wird. Dabei wird toleriert, dass das Produkt bei der Umsetzung kurzfristige (< 60 Sekunden) Abweichungen der Reaktionstemperatur von den oben genannten Bereichen erfährt.

Das so erzeugte mindestens eine Prepolymer, vorzugsweise Hydroxy-terminierte Prepolymer, kann beispielsweise in mindestens einer weiteren Verfahrensstufe mit mindestens einem Kettenverlängerer zum thermoplastischen Polyurethanpolymer umgesetzt werden. Dabei können entweder die Gesamtmengen der beiden Komponenten, d.h. des erzeugten mindestens einen Prepolymers, vorzugsweise Hydroxy-terminierten Prepolymers, und des mindestens einen Kettenverlängerers, miteinander in einer Verfahrensstufe umgesetzt werden oder es wird eine Teilmenge der einen Komponenten mit der Gesamtmenge oder einer Teilmenge der anderen Komponente in mehreren Verfahrensstufen umgesetzt. Vorzugsweise werden ein oder mehrere aliphatische Diisocyanate mit einem Molekulargewicht von 140 g/mol bis 170 g/mol als Kettenverlängerer eingesetzt.

Wenn es sich bei dem Prepolymer um ein Hydroxy-terminiertes Prepolymere handelt, dann kann dieses mit Hydroxygruppenreaktiven Kettenverängerern wie beispielsweise Polyisocyanaten umgesetzt werden. Als Polyisocyanate eigen sich dabei alle dem Fachmann bekannten Polyisocyanate. Vorzugsweise werden ein oder mehrere aliphatische Diisocyanate mit einem Molekulargewicht von 140 g/mol bis 170 g/mol als Kettenverlängerer eingesetzt. Wenn es sich bei dem Prepolymer um ein NCO-terminierten Prepolymer handelt, dann kann dieses mit NCO-reaktiven Kettenverängerern wie beispielsweise organischen Diolen, Thiolen, Diaminen und Mischungen aus mindestens zwei hiervon umgesetzt werden. Geeignete organische Diole, Thiole und Diamine sind dem Fachmann bekannt. Die Umsetzung des Prepolymers mit dem Ketternverlängerer zum Polymer kann beispielsweise in einem Extruder erfolgen.

Die Temperaturen zur Bildung des erfindungsgemäßen thermoplastischen Polyurethanpolymers durch Umsetzung des mindestens einen Prepolymers, vorzugsweise Hydroxy-terminierten Prepolymers, mit dem mindestens einen Kettenverlängerer im erfindungsgemäßen Verfahren können in Abhängigkeit von den eingesetzten Verbindungen ausgewählt werden. Bevorzugt ist hierbei jedoch, wenn die Umsetzung bei Temperaturen von $\geq 60\ °C$ bis $\leq 260\ °C$, vorzugsweise von $\geq 80\ °C$ bis $\leq 250\ °C$, besonders bevorzugt von $\geq 100\ °C$ bis $\leq 245\ °C$ und ganz besonders bevorzugt von $\geq 120\ °C$ bis $\leq 240\ °C$ durchgeführt wird. Dabei wird toleriert, dass das Produkt bei der Umsetzung kurzfristige (< 60 Sekunden) Abweichungen der Reaktionstemperatur von den oben genannten Bereichen erfährt.

Die Verfahrensstufen zur Erzeugung des erfindungsgemäßen thermoplastischen aliphatischen Polyurethanpolymers kann in einem einzelnen Apparat oder in einer Vielzahl von Apparaten durchgeführt werden. Beispielsweise kann die Erzeugung des Prepolymers, vorzugsweise Hydroxy-terminierten Prepolymers, zunächst in einem ersten Apparat (z.B. Loop-Reaktor oder kühlbarer Mischer) durchgeführt werden und dann das Reaktionsgemisch in einen weiteren Apparat (z.B. Extruder oder andere Hochviskosreaktoren) überführt werden, um das erfindungsgemäße thermoplastische aliphatische Polyurethanpolymer zu erzeugen.

In einer weiteren bevorzugten Ausführungsform findet die Umsetzung des mindestens einen Prepolymers, vorzugsweise Hydroxy-terminierten Prepolymers, mit dem mindestens einen Kettenverlängerer in einem Extruder statt.

In einer weiteren bevorzugten Ausführungsform findet die Herstellung des erfindungsgemäßen thermoplastischen aliphatischen Polyurethanpolymers in einer Kombination eines Loop-Reaktors mit einem Extruder statt.

In einer weiteren bevorzugten Ausführungsform findet die Herstellung des erfindungsgemäßen thermoplastischen aliphatischen Polyurethanpolymers in einer Kombination eines Statikmischers, Dynamikmischers, Loop-Reaktors oder Mischer-Wärmeübertragers mit einem beheizten Transportband statt.

Im Anschluss an die Umsetzung zum erfindungsgemäßen thermoplastischen aliphatischen Polyurethanpolymer wird dieses in eine Handelsform gebracht, typischerweise Granulat. Nach der Umsetzung in der finalen Verfahrensstufe liegt das erfindungsgemäße thermoplastischen aliphatischen Polyurethanpolymer im schmelzeflüssigen Zustand vor, wird im Schmelzezustand zerkleinert und durch Abkühlung zum Erstarren gebracht oder zuerst durch Abkühlen zum Erstarren gebracht und anschließend zerkleinert. Dies kann beispielsweise mit den dem Fachmann bekannten Methoden der Stranggranulierung, der Unterwasser-Stranggranulierung, der Wasserringgranulierung und der Unterwassergranulierung geschehen. Die Abkühlung erfolgt bevorzugt mit Wasser; auch eine Abkühlung mit Luft oder anderen Medien ist möglich.

Nach Umsetzung auf einem Bandreaktor kann das erfindungsgemäße thermoplastische aliphatische Polyurethanpolymer auch abgekühlt, gebrochen und gemahlen werden.

Das so erhaltene erfindungsgemäße thermoplastische aliphatische Polyurethanpolymer kann erfindungsgemäß in einem Feststoffmischprozess gemischt und in einem weiteren Extruder aufgeschmolzen und wieder granuliert werden. Dies ist vor allem dann bevorzugt, wenn erfindungsgemäße thermoplastische aliphatische Polyurethanpolymer nach dem Bandreaktor gekühlt und gemahlen wird, weil dieser Vorgang auch die Produktform homogenisiert.

Das erfindungsgemäße Herstellungsverfahren kann kontinuierlich oder diskontinuierlich, d.h. als Batch-Verfahren oder Semi-Batch-Verfahren durchgeführt werden.

Eine weitere Ausführungsform der Erfindung betrifft ein thermoplastisches aliphatisches Polyurethanpolymer erhältlich oder erhalten durch das erfindungsgemäße Verfahren.

Eine weitere Ausführungsform der Erfindung betrifft eine Zusammensetzung enthaltend mindestens ein erfindungsgemäßes thermoplastisches aliphatisches Polyurethanpolymer und mindestens ein Additiv und / oder ein weiteres thermoplastisches Polymer. Als Additive eigenen sich alle oben genannten Zusatzstoffe und Hilfsstoffe. Geeignete thermoplastische Polymere, die Bestandteil der erfindungsgemäßen Zusammensetzung sein können, sind beispielsweise Polystyrole, Polyamide, Polyethylen, Polypropylen, Polyacrylate, Polymethacrylate, Polyurethane oder auch Acrylnitril-Butadien-Styrol-Copolymere (ABS).

Aus den erfindungsgemäßen Zusammensetzungen können thermoplastische Formmassen hergestellt werden. Ein weiterer Gegenstand der Erfindung ist daher eine thermoplastische Formmasse, welche mindestens eine erfindungsgemäße Zusammensetzung umfasst. Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 180 °C bis 320 °C, besonders bevorzugt bei 200 °C bis 300 °C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert oder schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen thermoplastischen Formmassen können zur Herstellung von Formkörpern, Folien und / oder Fasern jeder Art verwendet werden. Ein weiterer Gegenstand der Erfindung ist daher ein Formkörper, eine Folie und / oder eine Faser, wobei der Formkörper, die Folie oder die Faser mindestens ein erfindungsgemäßes thermoplastisches Polyurethanpolymer, mindestens eine erfindungsgemäße thermoplastische Formmasse oder mindestens eine erfindungsgemäße Zusammensetzung umfasst. Diese können beispielsweise durch Spritzguss, Extrusion, Blasformverfahren und / oder Schmelzspinnen hergestellt werden. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in eine Spritzgussmaschine oder in ein Extrusionsaggregat zu dosieren und zu Formkörper zu verarbeiten.

Ein weiterer Gegenstand der Erfindung ist die Verwendung eines erfindungsgemäßen thermoplastischen Polyurethanpolymers, einer erfindungsgemäßen thermoplastischen Formmasse oder einer erfindungsgemäßen Zusammensetzung zur Herstellung eines Formkörpers, einer Folie und / oder einer Faser.

Ein weiterer Gegenstand der Erfindung ist die Verwendung eines erfindungsgemäßen thermoplastischen Polyurethanpolymers zur Herstellung einer Zusammensetzung, einer thermoplastischen Formmasse oder einer Polyurethan-Dispersion.

Ein weiterer Gegenstand der Erfindung ist ein Artikel umfassend oder enthaltend eine erfindungsgemäße thermoplastische Formmasse, ein erfindungsgemäßes thermoplastisches Polyurethan oder eine erfindungsgemäße Zusammensetzung.

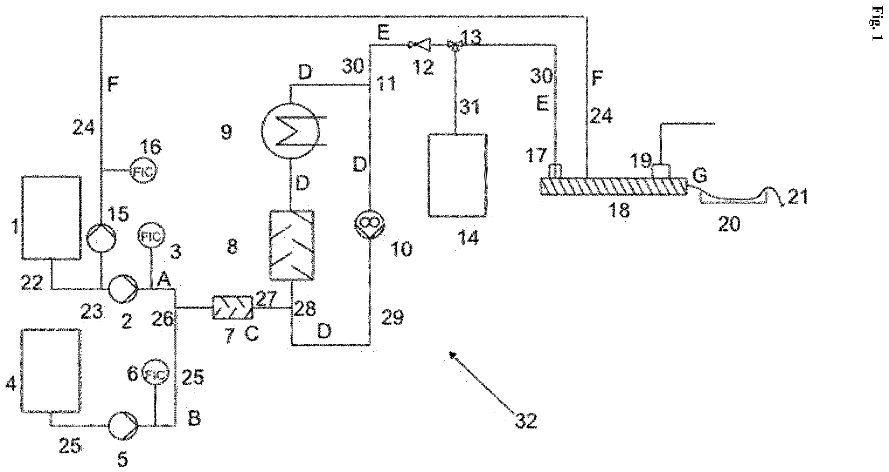

Die vorliegende Erfindung wird im Folgenden anhand der Figuren 1 bis 3 näher erörtert. Darin zeigt

Fig.1    eine Vorrichtung zur Durchführung des erfindungsgemäßen Verfahrens, sowie

Fig. 2    ein Thermogramm aus einer Differentialthermoanalyse der Vergleichsbeispiele 1 bis 3 und der erfindungsgemäßen Beispiele 4 und 5, das die zweite Aufheizung zeigt (materialabhängige Schmelzeigenschaften)

Fig. 3    Kennwerte als Funktion des massengemittelten Molekulargewichtes Mw a) Peak-Schmelztemperatur b) Schmelzenthalpie $\square H_M$

## Beispiele

Die vorliegende Erfindung wird anhand der nachfolgenden Beispiele weiter erläutert, ohne jedoch darauf beschränkt zu sein.

Es wurden fünf thermoplastische Polyurethanpolymere miteinander verglichen, die mit dem gleichen Syntheseverfahren hergestellt wurden, aber unterschiedliche Polymerisationsgrade aufweisen. Dabei wurden die Schmelzenthalpie und das Molekulargewicht dieser Polyurethanpolymere untersucht.

Bestimmung der Schmelzenthalpie

Die Bestimmung der Schmelzenthalpie erfolgt mittels Dynamischer Differenzkalorimetrie (engl. Differential scanning calorimetry, DSC) anhand DIN EN ISO 11357-1:2017-02. Die Messung erfolgte an einer Q2000 (TA Instruments). Es wurden zwei Aufheizungen und die Abkühlung im Bereich -40 °C bis 220 °C mit einer Heiz-/Kühlrate von 20 K/min durchgeführt. Die Probenmasse betrug circa 6 mg. Der Spülgasstrom (Stickstoff) betrug 50 ml/min.

Bestimmung des Molekulargewichtes

GPC-Methode zur Bestimmung von $M_n$ und $M_w$:
Das Zahlenmittel und das Massenmittel der Molmasse wurden mit Hilfe einer Gelpermeationschromatographie (GPC) bestimmt, wobei die zu untersuchende Probe in einer Lösung aus Kaliumtrifluoracetat in Hexafluorisopropanol mit einer Konzentration von 2 mg/cm³ aufgelöst wurde und ein Polymethylmethacrylatstandard verwendet wurde,.

| | |
|---|---|
| Pumpe: | HPLC-Pumpe 515 (Waters GmbH) |
| Detektor: | Smartline RI-Detektor 2300 (Knauer Wissenschaftliche Geräte GmbH) |
| Säulen: | 1 Vorsäule, 1000 Å PSS PFG 7μm, 300 Å PSS PFG 7μm 100 Å PSS PFG 7μm in dieser Reihenfolge (PSS Polymer Standards Service GmbH) |
| Entgasung: | Degaser PSS (PSS Polymer Standards Service GmbH) |
| Injektionsvolumen: | 100 Mikroliter |
| Temperatur: | 23 °C - 25 °C |
| Molmassen-Standard: | Polymethylmethacrylat-Standard-Kit (PSS Polymer Standards Service GmbH) |

Falls nicht explizit anders angegeben, wurden in der vorliegende Erfindung das Zentrifugenmittel der Molmasse $M_z$ mittels Gelpermeationschromatographie (GPC) unter Verwendung von Polymethylmethacrylat als Standard bestimmt. Die zu vermessende Probe wurde in einer Lösung von 3 g Kaliumtrifluoracetat in 400 Kubikzentimeter Hexafluorisopropanol aufgelöst (Probenkonzentration ca. 2 mg/Kubikzentimeter) und dann mit einer Flussrate von 1 Kubikzentimeter/Minute über eine Vorsäule gegeben und dann über drei in Reihe geschaltete Chromatographiesäulen getrennt, zuerst über eine 1000 Å PSS PFG 7 μm Chromatographiesäule, dann über eine 300 Ä PSS PFG 7 μm Chromatographiesäule und zuletzt über eine 100 Ä PSS PFG 7 μm Chromatographiesäule. Als Detektor wurde ein Brechungsindex-Detektor (RI-Detektor) verwendet. Das zahlengemittelte Molekulargewicht wurde aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \quad \text{in g/mol}$$

wobei,
$M_i$ die molare Masse der Polymere der Fraktion i ist, so dass $M_i < M_{i+1}$ für alle i, in g/mol ist, $n_i$ die Stoffmenge des Polymers der Fraktion $i$, in mol ist.

Das zentrifugengemittelte Molekulargewicht wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2}$$

wobei,
$M_i$ die molare Masse der Polymere der Fraktion $i$ ist, so dass $M_i < M_{i+1}$ für alle i, in g/mol ist, $n_i$ die Stoffmenge des Polymers der Fraktion i, in mol ist.

Beispiele 1 bis 5

Aus einer 250 - Liter - Vorlage 1 für 1,6-Hexamethylendiisocyanat wurde mit Hilfe einer Zahnringpumpe 2 (Firma HNP, MZR 7255) ein Polyisocyanatstrom A bestehend aus 1,6-Hexamethylendiisocyanat zu einem Statikmischer 7 gefördert. Der Durchsatz des Polyisocyanatstroms A wurde mittels eines Massendurchflussmessers 3 (Firma Bronkhorst, Mini Cori-Flow M1X, max. Durchfluss 12 kg/h) gemessen. Die Temperatur des 1,6-Hexamethylendiisocyanats betrug dabei Raumtemperatur.

Aus einer 250 - Liter - Vorlage 4 für 1,4-Butandiol wurde mit Hilfe einer Zahnringpumpe 5 (Firma HNP, MZR 7205) ein Polyolstrom B bestehend aus 1,4-Butandiol zum Statikmischer 7 gefördert. Der Durchsatz des Polyolstroms B wurde mittels eines Massendurchflussmessers 6 (Firma Bronkhorst, Mini Cori-Flow M1X, max. Durchfluss 8 kg/h) gemessen. Die Temperatur des 1,4-Butandiols betrug 40 °C.

In dem Statikmischer 7 (Sulzer SMX, Durchmesser 6 mm, Verhältnis von Länge zu Durchmesser L/D = 10) wurden der Polyisocyanatstrom A und der Polyolstrom B miteinander gemischt, so dass ein Mischungsstrom C erhalten wurde. Die Massenströme des Polyisocyanatstroms A und des Polyolstroms B wurden so eingestellt, dass der Isocyanat-Index im Mischungsstrom C 78 betrug.

Mischungsstrom C wurde über eine Einmündung 28 in die Kreislaufleitung 29 geleitet, in dem ein Kreislaufstrom D in einem Kreislauf geführt wurde. Stromabwärts der Einmündung 28 wurde der Kreislaufstrom D in einen Statikmischer 8 (Statikmischer äquivalent zu Sulzer SMX, Innendurchmesser 34 mm, L/D=20) geführt. Die Temperatur des Prepolymerstromes D betrug 182 °C.

Stromabwärts des Statikmischers 8 wurde der Kreislaufstrom D in einen temperierbaren statischen Mischer 9 geführt. Dort fand die Oligomerisierung des Kreislaufstroms D mit Mischungsstrom C zum großen Teil statt und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern und eine Wärmeaustauschfläche von 0,44 Quadratmeter. Er war mit Wärmeträgeröl beheizt/gekühlt. Die Heizmitteltemperatur am Eintritt betrug 180 °C.

Aus dem temperierbaren statischen Mischer 9 trat der Kreislaufstrom D mit einer Temperatur von 183 °C aus. Stromabwärts des temperierbaren statischen Mischers 9 wurde an einer Einmündung 11 ein Prepolymerstrom E aus dem Kreislaufstrom D abgeteilt und der Kreislaufstrom D weiter zu einer Zahnradpumpe 10 geführt. Der Prepolymerstrom E wurde in einen Extruder 18 geleitet.

Der Druck des Kreislaufstroms D wurde an einer Zahnradpumpe 10 erhöht. Der Druck des Prepolymerstroms E wurde in der Prepolymerzuführungsleitung (30) zwischen der vierten Einmündung (11) und dem Druckhalteventiel (12) gemessen. Die Zahnradpumpe 10 (Firma Witte Chem 25,6-3) hatte ein Volumen pro Umdrehung von 25,6 Kubikzentimeter und eine Drehzahl von 50 pro Minute. Der Kreislaufstrom D wurde stromabwärts der Pumpe an Einmündung 28 mit Mischungsstrom C vereinigt, wie bereits beschrieben.

Die Kreislaufleitung 29 bestand aus doppelwandig ausgeführten Rohrleitungen, die mit Thermoöl beheizt waren. Die Heizmitteltemperatur betrug 182 °C. Der Statikmischer 8, der temperierbare statischen Mischer 9 und die Zahnradpumpe 10 bestanden aus Apparaten, die mit Thermoöl beheizt waren. Die Heizmitteltemperatur betrug 182 °C.

Die Reaktivextrusion wurde in einem Extruder 18 bei einer Temperatur von 200 °C und einer Drehzahl von 66 Umdrehungen pro Minute durchgeführt. Der Extruder 18 war ein ZSK 26 MC der Firma Coperion, mit einem Schneckendurchmesser von 26 mm und einem Länge zu Durchmesser Verhältnis von 36 bis 40.

An dem Extruder 18 befand sich eine Entlüftung 17, die bei ca. 1 mbar Unterdruck gegenüber dem Normaldruck betrieben wurde und in der Prepolymerstrom E von eventuell mit dem Polyisocyanatstrom A und dem Polyolstrom B eingeschleppten Inertgasen und möglichen gasförmigen Reaktionsprodukten befreit wurde.

Aus Vorlage 1 wurde mit Hilfe einer Mikrozahnringpumpe 15 (MZR 6355 der Firma HNP) ein Isocyanatzuführungsstrom F bestehend aus 1,6-Hexamethylendiisocyanat entnommen. Der Durchsatz des Isocyanatzuführungsstroms F wurde mittels eines Massendurchflussmessers 16 (Firma Bronkhorst, Mini Cori-Flow, M1X, maximaler Durchfluss 2 kg/h) gemessen. Die Temperatur des 1,6-Hexamethylendiisocyanat betrug Raumtemperatur. Der Isocyanatzuführungsstrom F wurde stromabwärts des Prepolymerstroms E in den Extruder 18 geleitet. In dem Extruder 18 wurde der Prepolymerstrom E mit dem Isocyanatzuführungsstrom F bei einem Isocyanatindex von 99 zu einem thermoplastischen Polyurethan G umgesetzt.

Am in Durchflussrichtung betrachtet letzten Drittel des Extruders 18 war eine Entgasung 19 angeordnet an der das thermoplastische Polyurethan G bei 200 mbar unter Normaldruck mit Hilfe eines Vakuumdoms, der auf einem Entgasungsschacht des Extruders angeordnet war, von flüchtigen Bestandteilen befreit wurde. Das thermoplastische Polyurethan G wurde nach dem Austritt aus dem Extruder 18 durch zwei Düsen in einem mit deionisierten Wasser (VE-Wasser) gefüllten Wasserbad 20 abgekühlt und durch einen Granulator 21 zu Granulat zerschnitten.

Tabelle 1: Stoffströme bei der Herstellung der TPUs in Beispiel 1 bis 5

| Beispiel-# | Strom A (HDI) | Strom B (BDO) | Strom J (HDI) | Druck in Prepolymerzuführungsleitung (30) |
|---|---|---|---|---|
| 1 | 2,91 kg/h | 2 kg/h | 0,784 kg/h | 4,4 bar |
| 2 | 2,91 kg/h | 2 kg/h | 0,784 kg/h | 4,6 bar |
| 3 | 2,91 kg/h | 2 kg/h | 0,784 kg/h | 4,9 bar |
| 5 | 2,91 kg/h | 2 kg/h | 0,784 kg/h | 5,4 bar |
| 4 | 2,91 kg/h | 2 kg/h | 0,784 kg/h | 5,7 bar |

Ergebnisse

Die Schmelzeigenschaften und die Molekulargewichte der aus den Beispielen erhaltenen thermoplastischen Polyurethane wurden nach den oben beschriebenen Verfahren untersucht. Die Ergebnisse sind in Tabelle 2 zusammengefasst:

Tabelle 2: Schmelzenthalpie und Molekulargewicht der erhaltenen Polyurethane

| | Beispiel 1 | Beispiel 2 | Beispiel 3 | Beispiel 4 | Beispiel 5 |
|---|---|---|---|---|---|
| $M_w$ [kg/mol] | 85,7 | 111,5 | 152,2 | 238,3 | 282,9 |
| $M_w/M_n$ | 5,2 | 7,2 | 8,0 | 15,0 | 11,0 |
| $M_z/M_w$, | 3,9 | 4,8 | 5,0 | 4,6 | 6,1 |
| $\Delta H_{Kristall,100\%}$ [J/g] | 188 | 188 | 188 | 188 | 188 |
| Schmelzenthalpie (2. Aufh.) $\Delta H_M$ [J/g] | 108,7 | 105,7 | 101,3 | 99,1 | 98,9 |
| Peak-Schmelztemperatur (2. Aufh.) [C°] | 181,4 | 181,1 | 181,0 | 179,5 | 181,1 |
| Kristallinitätsgrad $\chi$ [%] | 57,8 | 56,2 | 53,9 | 52,7 | 52,6 |

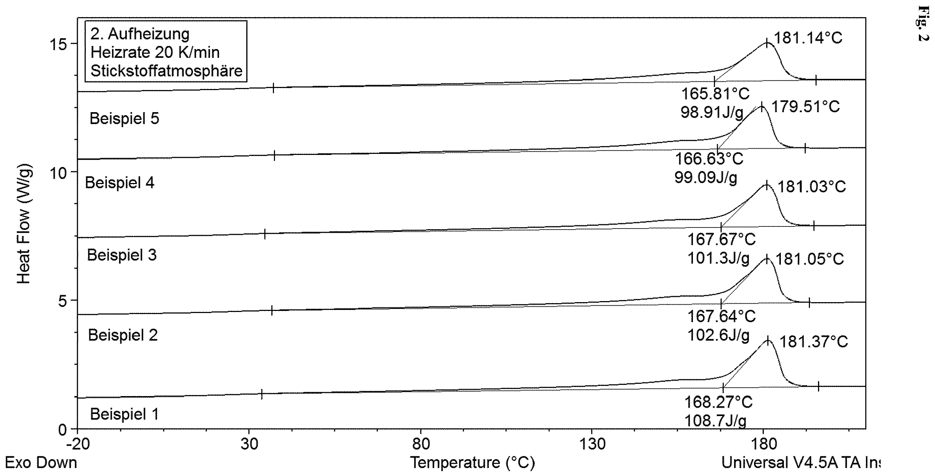

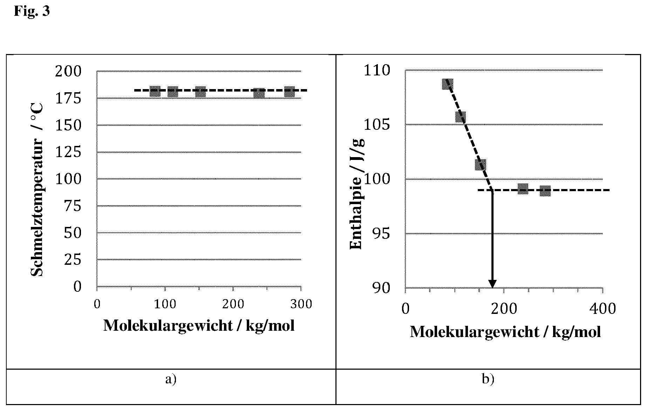

Die DSC Thermogramme in der zweiten Aufheizung der untersuchten Materialien sind in Figur 2 dargestellt, die daraus ermittelten Kennwerte in Fig. 3. Die thermoplastischen Polyurethane aus den Beispielen weisen jeweils ein massengemitteltes Molekulargewicht in einem ähnlichen Bereich von ca. 86 kg/mol bis ca. 283 g/mol und auch ähnliche Peak-Schmelztemperaturen im Bereich von 176,5 °C bis 181,4 °C auf. Bei der Schmelzenthalpie zeigt sich jedoch ab circa 170 kg/mol ein Plateau in Abhängigkeit vom Molekulargewicht. Aufgrund der niedrigeren Schmelzenthalpie des erfindungsgemäßen TPU muss bei der Weiterverarbeitung durch Aufschmelzen und nachfolgender Formgebung weniger Energie für das Aufschmelzen aufgebracht werden, als für die TPU mit Mw < 170 kg/mol. Wird für das Aufschmelzen der thermoplastischen Polyurethane aus den beiden Beispielen jeweils die gleiche Menge an Energie verwendet, so schmilzt das erfindungsgemäße TPU schneller.

**Bezugszeichenliste**

(A)     Polyisocyanatstrom
(B)     Polyolstrom
(C)     Mischungsstrom
(D)     Kreislaufstrom
(E)     Prepolymerstrom
(F)     Isocyanatzuführungsstrom
(G)     thermoplastisches Polyurethan
(1)     Isocyanat-Vorratsbehälter
(2)     erste Fördereinrichtung
(3)     erster Massendurchflussmesser
(4)     Polyol-Vorratsbehälter
(5)     zweite Fördereinrichtung
(6)     zweiter Massendurchflussmesser
(7)     erste Mischungseinrichtung
(8)     zweite Mischungseinrichtung
(9)     temperierbare Mischungseinrichtung
(10)    temperierbare Fördereinrichtung
(11)    vierte Einmündung
(12)    Druckregelventil
(13)    Dreiwegeventil
(14)    Abfallbehälter
(15)    dritte Fördereinrichtung
(16)    dritter Massendurchflussmesser
(17)    Entlüftungseinrichtung

(18)     Extruder
(19)     Entgasungsschacht
(20)     Kühlungseinrichtung
(21)     Zerkleinerungseinrichtung
(22)     Isocyanatleitung
(23)     erste Einmündung
(24)     Isocyanatzuführungsleitung
(25)     Polyolleitung
(26)     zweite Einmündung
(27)     Kreislaufzuführungsleitung
(28)     dritte Einmündung
(29)     Kreislaufleitung
(30)     Prepolymerzuführungsleitung
(31)     Abfallleitung
(32)     Vorrichtung


**Patentansprüche**

1.  Thermoplastisches aliphatisches Polyurethanpolymer mit einem $\overline{M}_w$ von $\geq$ 170000 g/mol, **dadurch gekennzeichnet, dass** die Schmelzenthalpie $\Delta H_{Polymer}$ unabhängig von dem $\overline{M}_w$ des thermoplastischen aliphatischen Polyurethanpolymers ist, $\Delta H_{Polymer}$ die gemessene Schmelzenthalpie in [J/g] des thermoplastischen aliphatischen Polyurethanpolymers ist, ermittelt mit Dynamischer Differenzkalorimetrie (DSC) gemäß DIN EN ISO 11357-1:2017-02 mit einer Heizrate von 20 K/min im Bereich von -40 °C bis 220 °C, und $\overline{M}_w$ das Massenmittel der Molmasse ist, ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

2.  Thermoplastisches aliphatisches Polyurethanpolymer nach Anspruch 1, **dadurch gekennzeichnet, dass** das thermoplastisches aliphatisches Polyurethanpolymer ein $\overline{M}_w$ im Bereich von 170000 g/mol bis 350000 g/mol, vorzugsweise im Bereich von 175000 g/mol bis 300000 g/mol, besonders bevorzugt im Bereich von 200000 g/mol bis 300000 g/mol, noch bevorzugter im Bereich von 250000 g/mol bis 285000 g/mol aufweist.

3.  Thermoplastisches aliphatisches Polyurethanpolymer nach Anspruch 1 oder 2, **dadurch gekennzeichnet, dass** die Schmelzenthalpie $\Delta H_{Polymer}$ unabhängig von dem $\overline{M}_w$ des thermoplastischen aliphatischen Polyurethanpolymers ist und sich die Schmelzenthalpiewerte entsprechender Polyurethanpolmere mit unterschiedlichem $\overline{M}_w$, welches jeweils $\geq$ 170000 g/mol ist, nicht mehr als 2%, vorzugsweise nicht mehr 1,5% und besonders bevorzugt nicht mehr 1% von arithmetischen Mittel der Schmelzenthalpien dieser Polyurethanpolymere unterscheiden.

4.  Thermoplastisches aliphatisches Polyurethanpolymer nach einem der Ansprüche 1 bis 3, **dadurch gekennzeichnet, dass** das thermoplastisches aliphatisches Polyurethanpolymer einen Kristallinitätsgrad $\chi$ von $\geq$ 40 % aufweist, wobei der Kristallinitätsgrad $\chi$ gemäß der folgenden Gleichung bestimmt wird:

$$\chi = (\Delta H_{M,Polymer}/\Delta H_{Kristall,100\%}) \cdot 100\%,$$

    wobei $\Delta H_{M,Polymer}$ die gemessene Schmelzenthalpie in [J/g] des thermoplastischen aliphatischen Polyurethanpolymers ist, ermittelt mit Dynamischer Differenzkalorimetrie (DSC) gemäß DIN EN ISO 11357-1:2017-02 mit einer Heizrate von 20 K/min im Bereich von -40 °C bis 220 °C, und
    $\Delta H_{Kristall, 100\%}$ die Schmelzenthalpie des entsprechenden zu 100 % kristallinen thermoplastischen aliphatischen Polyurethanpolymers in [J/g] ist, ermittelt mit Dynamischer Differenzkalorimetrie und Röntgenstreuanalyse.

5.  Thermoplastisches aliphatisches Polyurethanpolymer nach einem der Ansprüche 1 bis 4, **dadurch gekennzeichnet, dass** das thermoplastische aliphatische Polyurethanpolymer einen Kristallinitätsgrad $\chi$ im Bereich von 40 % bis 55 %, bevorzugt im Bereich von 45 % bis 54 %, noch bevorzugter im Bereich von 48 % bis 53 % und am bevorzugsten im Bereich von 50 % bis 53 % aufweist.

6. Thermoplastisches aliphatisches Polyurethanpolymer nach einem der Ansprüche 1 bis 5, **dadurch gekennzeichnet, dass** das Verhältnis $\overline{M}_w/\overline{M}_n$ des thermoplastischen aliphatischen Polyurethanpolymers in einem Bereich von 8.5 bis 20, vorzugsweise in einem Bereich von 9 bis 18, besonders bevorzugt in einem Bereich von 10 bis 15 liegt, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

7. Thermoplastisches aliphatisches Polyurethanpolymer nach einem der Ansprüche 1 bis 6, **dadurch gekennzeichnet, dass** das Verhältnis $\overline{M}_z / \overline{M}_w$ des thermoplastischen aliphatischen Polyurethanpolymers in einem Bereich von 3 bis 8 vorzugsweise in einem Bereich von 4,5 bis 6,1 liegt, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

8. Thermoplastisches aliphatisches Polyurethanpolymer nach einem der Ansprüche 1 bis 7, **dadurch gekennzeichnet, dass** das thermoplastische aliphatische Polyurethanpolymer durch Umsetzung von einem oder mehreren aliphatischen Polyisocyanaten mit einem Molekulargewicht im Bereich von $\geq 140$ g/mol bis $\leq 400$ g/mol, vorzugsweise von einem oder mehreren aliphatischen Diisocyanaten mit einem Molekulargewicht im Bereich von 140 g/mol bis 170 g/mol, mit einem oder mehreren aliphatischen Polyolen mit einem Molekulargewicht im Bereich von 62 g/mol bis 210 g/mol, vorzugsweise einem oder mehreren aliphatischen Diolen mit einem Molekulargewicht im Bereich von 62 g/mol bis 210 g/mol, besonders bevorzugt einem oder mehreren unverzweigten aliphatischen Diolen mit einem Molekulargewicht im Bereich von 62 g/mol bis 120 g/mol erhältlich ist.

9. Thermoplastisches aliphatisches Polyurethanpolymer nach einem der Ansprüche 1 bis 8, **dadurch gekennzeichnet, dass** das thermoplastische aliphatische Polyurethanpolymer zu mindestens 80 Gew.-%, vorzugsweise zu mindestens 90 Gew.-%, besonders bevorzugt zu mindestens 95 Gew.-%, noch bevorzugter zu mindestens 98 Gew.-%, noch mehr bevorzugter zu mindestens 99 Gew.-%, und am bevorzugtesten zu mindestens 99,9 Gew.-% aus dem Reaktionsprodukt der Umsetzung von 1,6-Hexamethylendiisocyanat mit 1,4-Butandiol besteht, bezogen auf die Gesamtmasse des thermoplastischen aliphatischen Polyurethanpolymers.

10. Thermoplastisches aliphatisches Polyurethanpolymer nach einem der Ansprüche 1 bis 9, **dadurch gekennzeichnet, dass** die Schmelzenthalpie $\Delta H_{M,Polymer}$ des thermoplastischen aliphatischen Polyurethanpolymers $\leq 100$ J/g ist, ermittelt mit Dynamischer Differenzkalorimetrie (DSC) gemäß DIN EN ISO 11357-1:2017-02 mit einer Heizrate von 20 K/min im Bereich von -40 °C bis 220 °C.

11. Verfahren zur Herstellung eines thermoplastischen aliphatischen Polyurethanpolymers nach einem der Ansprüche 1 bis 10, **dadurch gekennzeichnet, dass** in einem ersten Schritt zumindest ein oder mehrere aliphatische Polyisocyanate mit einem oder mehreren aliphatischen Polyolen, gegebenenfalls in Gegenwart eines Katalysators und/oder Hilfs- und Zusatzstoffen, zu mindestens einem Prepolymer umgesetzt werden, vorzugsweise zu mindestens einem Hydroxy-terminierten Prepolymer, und das im ersten Schritt erhaltende mindestens eine Prepolymer in einem zweiten Schritt mit mindestens einem Kettenverlängerer, vorzugsweise mindestens einem Polyisocyanat, besonders bevorzugt mindestens einem Diisocyanat, zum thermoplastischen Polyurethanpolymer umgesetzt wird, wobei insgesamt ein molares NCO/OH-Verhältnis aller im Verfahren eingesetzter Polyisocyanate und Polyole im Bereich von 1,0 : 0,95 bis 0,95 : 1,0 vorliegt.

12. Verfahren nach Anspruch 11, **dadurch gekennzeichnet, dass** unabhängig voneinander als aliphatisches Polyisocyanat ein aliphatisches Diisocyanat eingesetzt wird, vorzugweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan und/oder Mischungen aus mindestens 2 hieraus, besonders bevorzugt ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und noch bevorzugter wobei als aliphatisches Polyisocyanat 1,6-Diisocyanatohexan (HDI) eingesetzt wird, und als aliphatisches Polyol ein aliphatisches Diol eingesetzt wird, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol und/oder Mischungen aus mindestens 2 hieraus, besonders bevorzugt ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, noch bevorzugter ausgewählt wobei als aliphatisches Polyol 1,4-Butandiol eingesetzt wird.

13. Zusammensetzung enthaltend mindestens ein thermoplastisches aliphatisches Polyurethanpolymer nach einem der Ansprüche 1 bis 10 und mindestens ein Additiv und / oder ein weiteres thermoplastisches Polymer umfasst.

14. Thermoplastische Formmasse, **dadurch gekennzeichnet, dass** sie mindestens eine Zusammensetzung nach Anspruch 13 umfasst.

15. Formkörper, Folie und / oder Faser **dadurch gekennzeichnet, dass** der Formkörper, die Folie oder die Faser mindestens ein thermoplastisches Polyurethanpolymer nach einem der Ansprüche 1 bis 10, mindestens eine thermoplastische Formmasse nach Anspruch 14 oder mindestens eine Zusammensetzung nach Anspruch 13 umfasst.

16. Verwendung eines thermoplastischen Polyurethanpolymers nach einem der Ansprüche 1 bis 10, einer thermoplastischen Formmasse nach Anspruch 14 oder einer Zusammensetzung nach Anspruch 13 zur Herstellung eines Formkörpers, einer Folie und / oder einer Faser.

17. Verwendung eines thermoplastischen aliphatischen Polyurethanpolymers nach einem der Ansprüche 1 bis 10 zur Herstellung einer Zusammensetzung, einer thermoplastischen Formmasse oder einer Polyurethan-Dispersion.

18. Artikel umfassend oder enthaltend ein thermoplastisches aliphatisches Polyurethanpolymer nach einem der Ansprüche 1 bis 10, eine thermoplastische Formmasse nach Anspruch 14 oder eine Zusammensetzung nach Anspruch 13.

**Fig. 1**

**Fig. 2**

Fig. 3

a)

b)

Europäisches
Patentamt

European
Patent Office

Office européen
des brevets

**EUROPÄISCHER RECHERCHENBERICHT**

Nummer der Anmeldung

EP 19 21 6787

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 598 283 A1 (BAYER AG [DE]) 25. Mai 1994 (1994-05-25) * Ansprüche 1-6; Beispiele 1-12 * * Seite 4, Zeile 54 - Seite 5, Zeile 7 * ----- | 1-18 | INV. C08G18/10 C08G18/32 C08G18/73 |

RECHERCHIERTE
SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 27. April 2020 | Sütterlin, Martin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 21 6787

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-04-2020

| Im Recherchenbericht angeführtes Patentdokument | Datum der Veröffentlichung | Mitglied(er) der Patentfamilie | Datum der Veröffentlichung |
|---|---|---|---|
| EP 0598283 A1 | 25-05-1994 | EP 0598283 A1<br>JP H06206963 A | 25-05-1994<br>26-07-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 107141437
- CN 105001626
- US 2017145146 A
- DE 2901774 A

**In der Beschreibung aufgeführte Nicht-Patentliteratur**

- **KAJIYAMA, T. ; MACKNIGHT, W.J.** *Polymer Journal,* 1970, vol. 1, 548-554
- Makromolekulare Stoffe. HOUBEN-WEYL ''Methoden der organischen Chemie. Georg Thieme Verlag, 1987, vol. E20, 1587-1593
- *Justus Liebigs Annalen der Chemie,* 1949, vol. 562, 75-136
- High Polymers. **J.H. SAUNDERS ; K.C. FRISCH.** Monographie. Verlag Interscience Publishers, 1962, vol. XVI
- **R. GÄCHTER U. H. MÜLLER.** Taschenbuch für Kunststoff-Additive. Hanser Verlag, 1990